# EUROPÄISCHE PATENTSCHRIFT

(11) **EP 1 053 161 B1**
(45) Veröffentlichungstag und Bekanntmachung des Hinweises auf die Patenterteilung: **19.09.2001**
(21) Anmeldenummer: 99913159.2
(22) Anmeldetag: 12.02.1999
(51) Int. Cl.: B62D 1/04, B62D 1/11, F16F 7/12

(54) **LENKRAD FÜR KRAFTFAHRZEUGE**
STEERING WHEEL FOR MOTOR VEHICLES
VOLANT POUR VEHICULES AUTOMOBILES

(30) Priorität: 13.02.1998 DE 29802474 U
(43) Veröffentlichungstag der Anmeldung: 22.11.2000
(73) Patentinhaber: TRW Automotive Safety Systems GmbH & Co. KG, 63743 Aschaffenburg (DE)
(72) Erfinder: TSCHÖP, Winfried, D-97892 Kreuzwertheim (DE)
(74) Vertreter: Degwert, Hartmut, Dipl.-Phys.
(86) Internationale Anmeldenummer: EP9900924
(87) Internationale Veröffentlichungsnummer: WO9941131

(56) Entgegenhaltungen:
- EP-A- 0 648 661
- WO-A-97/10098
- DE-A- 1 479 716
- DE-A- 2 129 286
- GB-A- 2 058 694
- GB-A- 2 068 314
- GB-A- 2 269 887
- US-A- 5 649 455

## Beschreibung

Die Erfindung betrifft ein Lenkrad für Kraftfahrzeuge, bestehend aus einem topfförmigen Unterteil und einem damit randseitig verbundenen Oberteil, wobei beide Teile eine Außenschale aus hochfestem Kunststoff aufweisen. Ein derartiges Lenkrad ist beispielsweise aus der DE-A-21 29 286 bekannt.

Lenkräder für Kraftfahrzeuge bestehen im allgemeinen aus einem metallischen Lenkradskelett. einer Ummantelung aus geschäumtem Kunststoff mit lederartiger Außenhaut sowie einem im Lenkrad untergebrachten Airbag mit Abdeckung, die optisch und haptisch an die Außenhaut des Lenkrades angepaßt ist. Das Skelett kann aus Stahl, Aluminium. Magnesium oder Kombinationen dieser Metalle bestehen und ist so ausgelegt, daß es alle im Fahrbetrieb auftretenden Kräfte übertragen kann. Außerdem sind moderne Lenkräder vielfach noch so ausgelegt, daß sie sich bei einem Unfall gezielt verformen können, wenn der Fahrer auf das Lenkrad prallt. Zusammen mit dem sich schlagartig entfaltenden Airbag sollen damit die auf das Unfallopfer wirkenden Kräfte vermindert und Verletzungen vermindert und im besten Fall ausgeschlossen werden.

Die Herstellung derartiger Lenkräder ist verhältnismäßig aufwendig, weil neben der Linie zur Herstellung der metallischen Skelette eine zweite Fertigungslinie für die Ummantelung der Skelette mit einem geeigneten, aufschäumbaren und eine dichte, abriebfeste Außenhaut bildenden Kunststoff eingerichtet werden muß. Werden die Lenkradskelette gießtechnisch hergestellt, müssen sie von den Gießansätzen und Graten befreit werden, bevor sie in die Form zur Ummantelung mit Kunststoff eingelegt werden können. Lenkräder, die aus vorgefertigten Naben, Speichen und Lenkradkränzen bestehen. erfordem zusätzliche Niet-. Schraub- oder Schweißvorgänge bis ein für die Ummantelung fertiges Skelett vorliegt.

Neben dem fertigunsstechnischen Aufwand wird bei herkömmlichen Lenkrädem als nachteilig angesehen. daß die Ummantelung als solche schon einen gewissen Aufprallschutz bietet, weil damit das tragende Lenkradskelett, zumindest in allen Aufprallbereichen abgedeckt ist, daß sie zur Konstruktionsfestigkeit des Lenkrades aber nichts beiträgt. Diese muß durch entsprechende Querschnittsgestaltung des Lenkradskelettes erreicht werden, wodurch dem allgemeinen Streben nach Gewichtsminderung bei Kraftfahrzeugen enge Grenzen gesetzt sind, selbst wenn man auf Aluminium- oder Magnesiumlegierungen zurückgreift.

Aus der US-A-5 649 455 ist ein in einer Lenkradnabe montiertes energieabsorbierendes Element mit wabenförmigen Stegen bekannt.

Der Erfindung liegt die Aufgabe zugrunde. ein Lenkrad zur Verfügung zu stellen, bei dem weitere Gewichtsersparnisse möglich sind, ohne daß seine Funktionen hinsichtlich der Übertragung von im Fahrbetrieb auftretenden Kräften sowie hinsichtlich Aufprallschutz eingeschränkt werden.

Zur Lösung dieser Aufgabe wird erfindungsgemäß vorgeschlagen, daß bei einem Lenkrad der eingangs genannten Art zumindest die Außenschale des Unterteils durch nach innen weisende, einstückig angeformte Stege verstärkt ist, die sich bei einem Aufprall unter Aufnahme von Formänderungsarbeit plastisch verformen.

Der Erfindung liegt die Erwägung zugrunde, daß man auf ein Lenkradskelett verzichten kann, wenn man auf geeignete, hochfeste Kunststoffe zurückgreift und durch entsprechende Formgebung dafür sorgt, daß die genannten Hauptfunktionen ausreichend erfüllt werden können. Der Übergang von der Skelett- zur Schalenbauweise hat darüber hinaus den weiteren Vorteil, daß man bei gleichen Werkstoffen für das Erreichen bestimmter Festigkeitswerte mit geringerem Materialaufwand auskommt, weil sich das tragende Material festigkeitsmäßig wesentlich besser ausnutzen läßt, wenn es in den Außenbereichen eines Bauteils angeordnet ist. Durch die freie Gestaltungsmöglichkeit bei der Gestaltung der Dicke der Außenschalen in Verbindung mit der Anordnung und Dicke der einstückig angeformten Stege lassen sich nicht nur die erforderlichen Festigkeitswerte erreichen, sondern auch gezielte plastische Verformungen vorsehen, so daß neben der Gewichtsersparnis auch ein besserer Aufprallschutz erreicht werden kann.

Zweckmäßige Ausgestaltungen des Erfindungsgedankens sind in den Unteransprüchen 2 bis 12 beschrieben. Weitere Einzelheiten werden anhand der in den Figuren 1 bis 5 dargestellten Ausführungsbeispiele näher erläutert. Es zeigen:
- Fig. 1a: einen Längsschnitt durch ein Lenkrad gemäß der Erfindung
- Fig. 1b - 1d: verschiedene Stufen der Lenkradumformung bei einem Aufprall
- Fig. 2: einen Teilschnitt durch ein Lenkrad mit Airbag-Einbauvolumen
- Fig. 3: eine Draufsicht auf eine halbe Unterschale eines Lenkrades
- Fig. 4: eine Draufsicht auf einen Teil einer Herstellungsform
- Fig. 5: eine perspektivische Ansicht eines Teiles einer Herstellungsform.

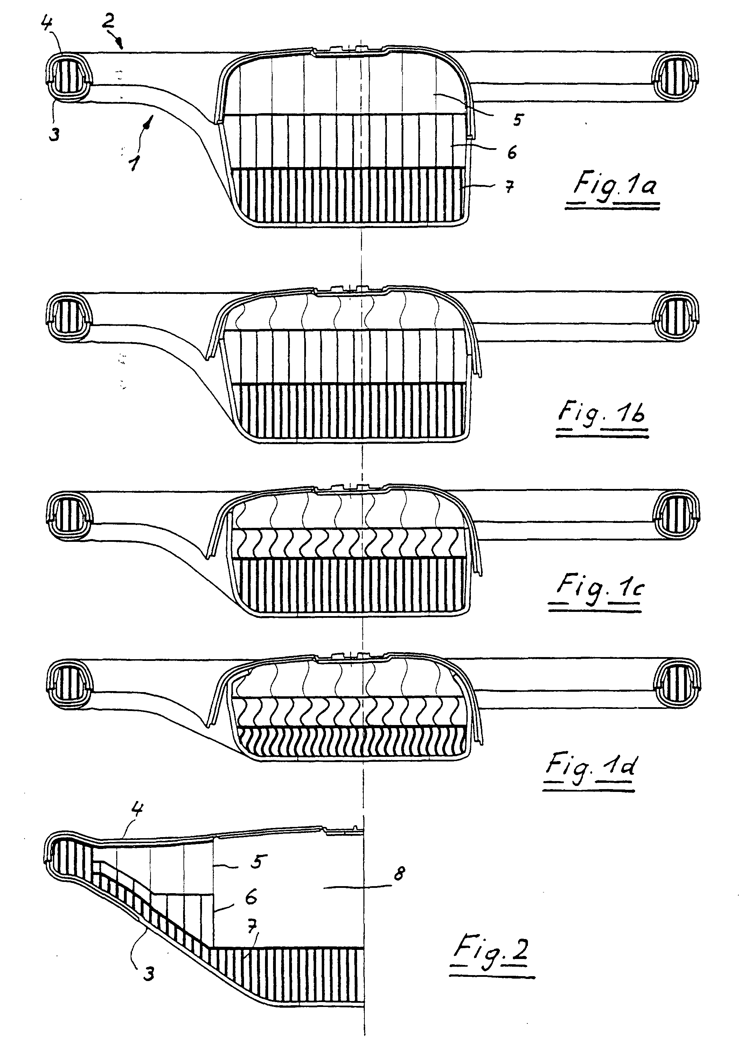

Das in Fig. 1a im Schnitt dargestellte Lenkrad besteht aus einem Unterteil 1 und einem Oberteil 2, wobei beide Teile 1, 2 eine Außenschale 3, 4 aus hochfestem Kunststoff aufweisen. Beide Teile 1, 2 sind randseitig miteinander verbunden. Das Unterteil 1 ist durch einstückig angeformte Stege verstärkt, die nach innen, d.h. in den Raum zwischen den Außenschalen 3, 4 hineinragen. Die Stege 5, 6, 7 können - wie dargestellt - unterschiedliche Wanddicken und Höhen aufweisen. Vorzugsweise werden die Stege mit einem stufenförmig sich ändernden Formänderungswiderstand ausgebildet. Die oberen Stege 5 haben eine geringere Wanddicke und sind mit größerem seitlichen Abstand angeordnet als die Stege 6 in der darunterliegenden Stufe. Die Stege 7 in der untersten Stufe sind noch enger angeordnet und weisen eine noch größere Wanddicke auf. Es versteht sich von selbst, daß man statt der dargestellten drei Stufen auch zwei oder mehr als drei Stufen vorsehen kann und daß man Stege mit von unten nach oben sich stetig verjüngender Wanddicke vorsehen kann. Üblich ist es, daß man bei einem Lenkrad-Aufprallschutz in Aufprallrichtung einen zunehmenden Formänderungswiderstand realisiert.

In den Figuren 1b bis 1d ist dargestellt, wie sich das Lenkrad verformt, wenn die Außenschale 4 des Oberteils 2 bei einem Unfall schlagartig beaufschlagt wird. Bei einer geringen Beaufschlagung bzw. zu Beginn einer größeren Beaufschlagung verformen sich zunächst die Stege 5 der obersten Schicht. Je nach Schwere des Aufpralls bzw. im Verlaufe des Aufpralls verformen sich dann auch die Stege 6 und 7 der mittleren bzw. unteren Stufe. Die Außenschalen 3 und 4 selbst bleiben dabei im wesentlichen unverändert. Insbesondere der Lenkradkranz wird nicht verformt, weil er aus Festigkeitsgründen eine verhältnismäßig hohe strukturelle Verstärkung durch Stege erhalten muß. In den Figuren 1b bis 1d sind keine Bezugsziffern vorgesehen, weil sich die Einzelteile in Zusammenschau mit Fig. 1a ohne weiteres ergeben und es hier nur darauf ankam, die stufenweise Verformung der Stege zu erläutern.

Fig. 2 zeigt, wie zwischen den Außenschalen 3 und 4 ein von Stegen freier Raum 8 zur Unterbringung eines Airbagmoduls vorgesehen werden kann. In derartigen Fällen ist die Außenschale 4 des Oberteils 2 selbstverständlich mit einer Abdeckung für das Airbagmodul ausgestattet, die in bekannter Weise längs Sollbruchlinien aufreißen und um Scharnierlinien aufklappen kann, wenn der Airbag schlagartig mit Gas gefüllt wird.

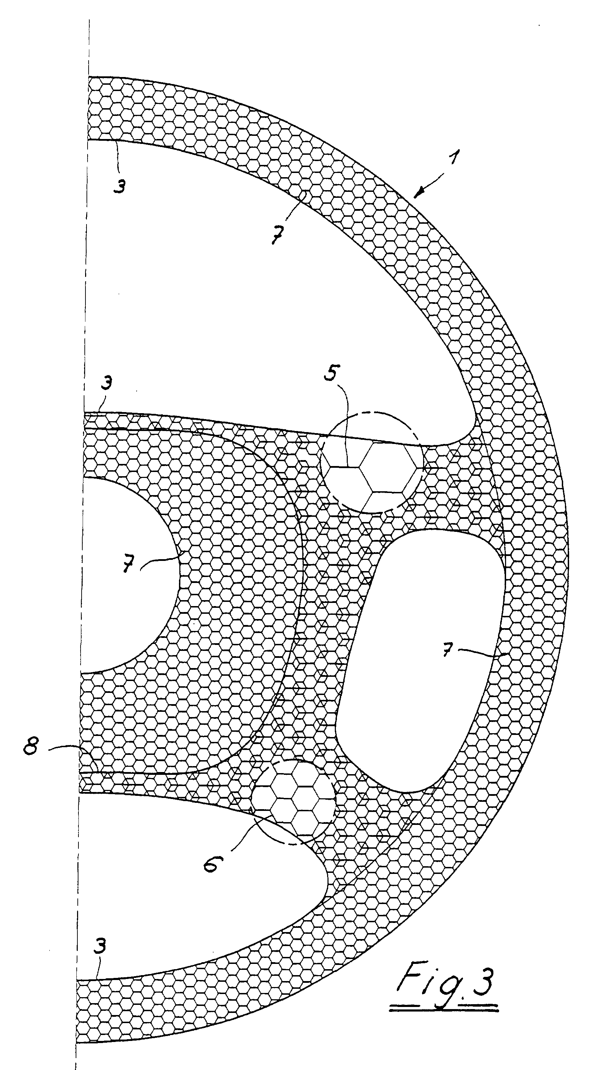

Aus der Draufsicht gemäß Fig. 3 auf ein halbes Unterteil 1 für ein erfindungsgemäßes Lenkrad ist ersichtlich, wie die Stege 5, 6 und 7 als sechseckige Waben angeordnet sind. Dabei wurde darauf verzichtet, bei den Stegen 5, 6 und 7 unterschiedliche Wanddicken darzustellen. Die Außenschale 3 weist überall eine erste Schicht von Stegen 7 auf, die in einem bestimmten, engen Abstandsraster angeordnet sind. In Teilbereichen ist diese erste Schicht von Stegen 7 mit einer zweiten Schicht von Stegen 6 und einer dritten Schicht von Stegen 5 überlagert, die ebenfalls als sechseckige Waben so angeordnet sind, daß die Stegwandungen der übereinanderliegenden Schichten möglichst weitgehend übereinanderliegen, so daß die Stege größter Länge und mit größtem Durchmesser der Sechsecke in das Raster der kürzeren, enger gestellten Stege der anderen Stufen hineinpassen. In der Mitte ist wiederum ein Raum 8 vorgesehen, der nur die Stege 7 der untersten Stufe, nicht aber die Stege 6 und 5 der oberen Stufen aufweist.

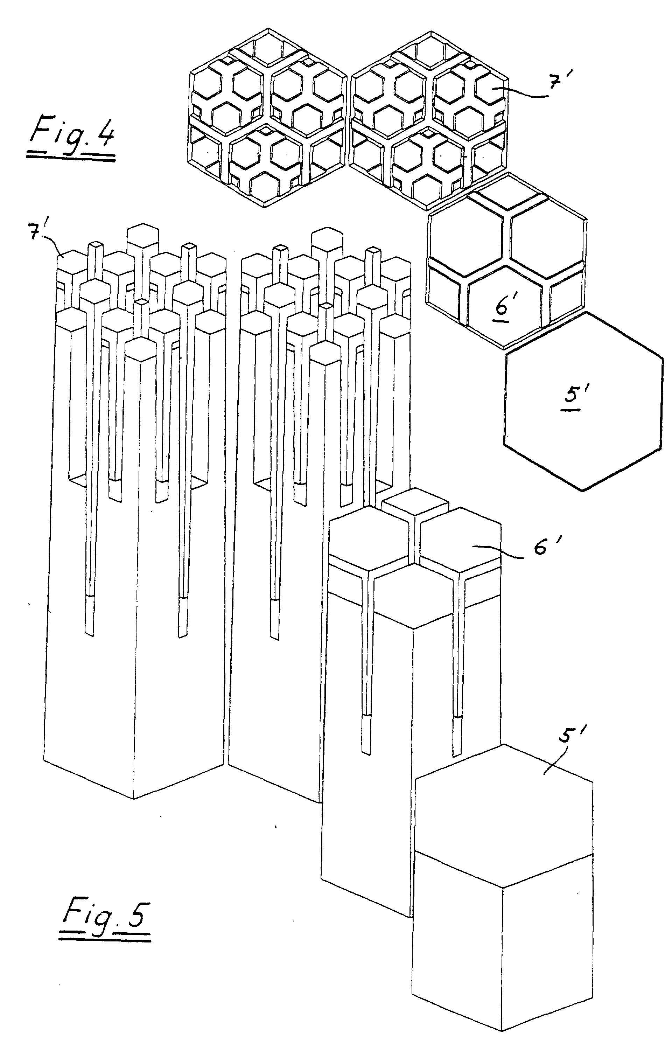

Aus den Figuren 4 und 5 ist ersichtlich, wie die Formkörper zur Ausbildung einer sechseckigen Wabenstruktur der Stege ausgebildet sein müssen. Zur Ausbildung der Stege 5 mit dem größten Rastermaß sind sechseckige Formkörper 5' erforderlich, wobei außerdem die zum Entformen erforderliche Formschräge berücksichtigt werden muß. Gleichermaßen sind für die Stege 6 mit mittlerem Rasterabstand sechseckige Formkörper 6' mit entsprechender Formschräge erforderlich. Diesen Formkörpern 6' sind schließlich noch sechseckige Formkörper 7' für die Ausbildung der am engsten stehenden Stege 7 überlagert. Sowohl in Fig. 4 wie auch in Fig. 5 ist nur ein Teil des Formkörpers für die Ausbildung der wabenförmigen Stegstruktur gemäß der Erfindung dargestellt, um das Verständnis zu erleichtern.

Bei der Realisierung des Erfindungsgedankens sind selbstverständlich auch andere Stegstrukturen möglich. Insbesondere könnte man auch daran denken, die ohnehin erforderliche Formschräge wesentlich stärker als erforderlich auszubilden und damit Stege zu schaffen, deren Wanddicke sich von unten nach oben stetig verändert. Auf diese Weise würde man ein sich stetig veränderndes Formänderungsverhalten erreichen.

## Patentansprüche

1. Lenkrad für Kraftfahrzeuge, bestehend aus einem topfförmigen Unterteil (1) und einem damit randseitig verbundenen Oberteil (2), wobei beide Teile (1, 2) eine Außenschale (3, 4) aus hochfestem Kunststoff aufweisen, **dadurch gekennzeichnet, daß** zumindest die Außenschale des Unterteils (1) durch nach innen weisende, einstückig angeformte Stege (5, 6, 7) verstärkt ist, die sich bei einem Aufprall unter Aufnahme von Formänderungsarbeit plastisch verformen.

2. Lenkrad nach Anspruch 1, **dadurch gekennzeichnet, daß** die Stege (5, 6, 7) fachwerkartig oder wabenartig angeordnet sind.

3. Lenkrad nach Anspruch 1 oder 2, **dadurch gekennzeichnet, daß** die Stege (5, 6, 7) einen in Richtung vom Oberteil (2) zum Unterteil (1) des Lenkrads hin zunehmenden Formänderungswiderstand aufweisen.

4. Lenkrad nach Anspruch 3, **dadurch gekennzeichnet, daß** die Stege (5, 6, 7) mit einem stufenförmig zunehmenden Formänderungswiderstand ausgebildet sind.

5. Lenkrad nach Anspruch 3, **dadurch gekennzeichnet, daß** die Stege (5, 6, 7) mit einem stetig zunehmenden Formänderungswiderstand ausgebildet sind.

6. Lenkrad nach einem der Ansprüche 1 bis 5, **dadurch gekennzeichnet, daß** im Lenkradkranz Stege (7) mit großem Formänderungswiderstand vorgesehen sind.

7. Lenkrad nach einem der Ansprüche 1 bis 6, **dadurch gekennzeichnet, daß** zwischen dem Oberteil (2) und dem Unterteil (1) ein von Stegen freier Raum (8) zur Unterbringung eines Airbagmoduls vorgesehen ist.

8. Lenkrad nach einem der Ansprüche 1 bis 7, **dadurch gekennzeichnet, daß** Ober- und Unterteile (2, 1) zumindest im Bereich des Lenkradkranzes durch Verklipsen miteinander verbunden sind.

9. Lenkrad nach Anspruch 8, **dadurch gekennzeichnet, daß** Ober- und Unterteile (2, 1) im zentralen Bereich ggf. zusätzlich mittels Schrauben miteinander verbunden sind.

10. Lenkrad nach einem der Ansprüche 1 bis 9, **dadurch gekennzeichnet, daß** Ober- und Unterteile (2, 1) mit einer Außenhaut aus zähem, flexiblem Kunststoff versehen sind.

11. Lenkrad nach einem der Ansprüche 1 bis 10, **dadurch gekennzeichnet, daß** das Unterteil (1) im Nabenbereich eine eingeformte, metallische Montagebuchse aufweist.

## Claims

1. A steering wheel for motor vehicles, consisting of a pot-shaped lower part (1) and an upper part (2) connected thereto along its edge side, both parts (1, 2) having an outer shell (3, 4) of higly resistant plastic material, **characterized in that** at least the outer shell of the lower part (1) is reinforced by webs (5, 6, 7) pointing inwards and being molded on integrally, which webs plastically deform in an impact taking up strain energy.

2. The steering wheel according to claim 1, **characterized in that** the webs (5, 6, 7) are arranged in framework-like or honeycomb-like fashion.

3. The steering wheel according to claim 1 or 2, **characterized in that** the webs (5, 6, 7) have a deformation resistance increasing in the direction from the upper part (2) to the lower part (1) of the steering wheel.

4. The steering wheel according to claim 3, **characterized in that** the webs (5, 6, 7) are designed with a gradually increasing deformation resistance.

5. The steering wheel according to claim 3, **characterized in that** the webs (5, 6, 7) are designed with a continuously increasing deformation resistance.

6. The steering wheel according to any of claims 1 to 5, **characterized in that** webs (7) having a high deformation resistance are provided in the steering wheel rim.

7. The steering wheel according to any of claims 1 to 6, **characterized in that** a space (8) free from webs is provided between the upper part (2) and the lower part (1), to accommodate an airbag module.

8. The steering wheel according to any of claims 1 to 7, **characterized in that** the upper and lower parts (2, 1) are connected with each other at least in the region of the steering wheel rim by clipping.

9. The steering wheel according to claim 8, **characterized in that** upper and lower parts (2, 1) are connected with each other in the central region optionally in addition by means of bolts.

10. The steering wheel according to any of claims 1 to 9, **characterized in that** the upper and lower parts (2, 1) are provided with an outer skin of tough, flexible plastics material.

11. The steering wheel according to any of claims 1 to 10, **characterized in that** the lower part (1) has a metallic mounting bush incorporated in the hub region.

## Revendications

1. Volant pour véhicules automobiles, constitué par une partie inférieure en forme de pot (1) et une partie supérieure (2) reliée en bordure de celle-ci, les deux parties (1, 2) présentant une coque extérieure (3, 4) en matière plastique hautement résistante, **caractérisé en ce qu'**au moins la coque extérieure de la partie inférieure (1) est renforcée par des âmes (5, 6, 7) formées d'un seul tenant et tournées vers l'intérieur qui, en cas de collision, se déforment plastiquement en absorbant un travail de déformation.

2. Volant selon la revendication 2, **caractérisé en ce que** les âmes (5, 6, 7) sont disposées en forme de treillis ou d'alvéoles.

3. Volant selon la revendication 1 ou 2, **caractérisé en ce que** les âmes (5, 6, 7) présentent une résistance à la déformation qui augmente dans la direction allant de la partie supérieure (2) vers la partie inférieure (1) du volant.

4. Volant selon la revendication 3, **caractérisé en ce que** les âmes (5, 6, 7) sont réalisées avec une résistance à la déformation qui augmente par étage.

5. Volant selon la revendication 3, **caractérisé en ce que** les âmes (5, 6, 7) sont réalisées avec une résistance à la déformation qui augmente de manière continue.

6. Volant selon l'une quelconque des revendications 1 à 5, **caractérisé en ce que** dans la couronne de volant sont prévues des âmes (7) de grande résistance à la déformation.

7. Volant selon l'une quelconque des revendications 1 à 6, **caractérisé en ce qu'**il est prévu entre la partie supérieure (2) et la partie inférieure (1) un espace (8) exempt d'âmes pour loger un module de coussin à gaz.

8. Volant selon l'une quelconque des revendications 1 à 7, **caractérisé en ce que** les parties supérieure et inférieure (2, 1) sont reliées l'une à l'autre par fixation par clips au moins dans la zone de la couronne de volant.

9. Volant selon la revendication 8, **caractérisé en ce que** dans la zone centrale, les parties supérieure et inférieure (2, 1) sont reliées l'une à l'autre éventuellement en supplément au moyen de vis.

10. Volant selon l'une quelconque des revendications 1 à 9, **caractérisé en ce que** les parties supérieure et inférieure (2, 1) sont pourvues d'une enveloppe extérieure en matière plastique flexible dure.

11. Volant selon l'une quelconque des revendications 1 à 9, **caractérisé en ce que** la partie inférieure (1) présente dans la zone du moyeu une douille de montage métallique moulée.
